# EUROPÄISCHE PATENTSCHRIFT

(11) **EP 0 547 492 B1**
(45) Veröffentlichungstag und Bekanntmachung des Hinweises auf die Patenterteilung: **11.03.1998**
(21) Anmeldenummer: 92120979.7
(22) Anmeldetag: 09.12.1992
(51) Int. Cl.: C08J 3/09

(54) **Organosol mit in der Ölphase suspendiertem wasserlöslichem Polymerisat**
Organosol containing water-soluble polymer suspended in oil phase
Organosol contenant un polymère hydrosoluble en suspension dans une phase huileuse

(30) Priorität: 19.12.1991 DE 4141981
(43) Veröffentlichungstag der Anmeldung: 23.06.1993
(73) Patentinhaber: Stockhausen GmbH & Co. KG, 47805 Krefeld (DE)
(72) Erfinder: Göldner, Ernst, Dr., W-7940 Riedlingen (DE); Braum, Manfred, W-6500 Mainz-Gonsenheim (DE); Silva, Gabriele, W-6100 Darmstadt (DE)
(74) Vertreter: Klöpsch, Gerald, Dr.-Ing. Patentanwalt

(56) Entgegenhaltungen:
- AT-B- 368 535
- DE-A- 2 322 883
- DE-A- 3 210 752

## Beschreibung

### Gebiet der Erfindung

Die Erfindung betrifft eine Polymersuspension eines in Wasser löslichen Polymerisates, das in einer organischen Phase in feiner Verteilung vorliegt. Man bezeichnet derartige Suspensionen namentlich wenn sie Wasser enthalten auch als Wasser-in-Öl(W/Ö)-Emulsionen oder als Organosole. Die Erfindung betrifft insbesondere solche Organosole, deren Polymerisatanteil in Wasser unter Bildung einer verdünnten wäßrigen Lösung gut und schnell löslich ist.

### Stand der Technik

Aus US 3 691 124 ist es bekannt, W/Ö-Emulsionen von wasserlöslichen Polymerisaten als Emulgiermittel ein Mischpolymerisat aus einem Monomeren mit basischen Stickstoffatomen, wie beispielsweise Dimethylaminoethylmethacrylat, und langkettigen Estern, das sind C₆- bis C₂₂-Alkylester, der Acryl- oder Methacrylsäure als Comonomere zuzusetzen. Die Auflösung derartiger Suspensionen in Wasser ist langwierig.

Aus der DE-A sind ähnliche Polymerisatsuspensionen bekannt, wobei zur Erhöhung der Absetzstabilität vorgeschlagen wird, den Dichteunterschied zwischen Polymerisatphase und der Ölphase möglichst gering zu halten. Öle hoher Dichte sind bevorzugt. Sie umfassen aromatenreiche Ölgemische und Gemische mit Chlorkohlenwasserstoffen .

Aus der DE-C 24 12 266 sind ähnliche Polymerisatsuspensionen mit solchen Polymeremulgatoren bekannt, die zusätzlich eine wasserlösliche Säure enthalten. Solange die Suspension eine zusammenhängende Ölphase enthält, wirkt das als Emulgiermittel zugesetzte Mischpolymerisat als W/Ö-Emulgiermittel. Beim Einrühren in Wasser setzt es sich mit der wasserlöslichen Säure um und wird dadurch zu einem Ö/W-Emulgiermittel, welches nunmehr die Emulgierung der vorher zusammenhängenden Ölphase bewirkt und eine rasche Freisetzung und Lösung des wasserlöslichen Polymerisats gestattet. Obwohl die Auflösungsgeschwindigkeit in Wasser durch den Säurezusatz erheblich erhöht wird, war eine weitere Beschleunigung des Lösevorganges erwünscht.

Die Lösung dieser Aufgabe beruht nach DE-C 32 10 752 auf dem Einsatz eines Gemisches von wenigstens zwei sehr ähnlichen, in der organischen Phase löslichen Mischpolymerisaten von basischen Stickstoffatome enthaltenden Monomeren, die sich im Gehalt an basischem Stickstoff geringfügig unterscheiden. Überraschenderweise bewirkt die Verwendung eines solchen Gemisches eine beschleunigte Auflösung der Suspension in Wasser in Gegenwart einer wasserlöslichen Säure.

Als organische Phase sind Kohlenwasserstoffe und Chlorkohlenwasserstoffe gennant, deren Siedepunkt nicht unterhalb der Polymerisationstemperatur liegt. Stabilisierende Zusätze sind nicht enthalten.

Die Herstellung des emulgierenden Mischpolymerisats wird in der US 3 691 124 bzw. der DE-C 24 12 266 in Abwesenheit eines das Molekulargewicht des Mischpolymerisats beinflussenden Reglers und in der DE-C 32 10 752 in Gegenwart von Dodecylmercaptan als Regler beschrieben.

In der EP-B 0 126 528 wird ein Polymerisationsverfahren in umgekehrter Phase zur Herstellung einer Dispersion eines wasserlöslichen oder in Wasser quellbaren Polymers in einer mit Wasser nicht mischbaren Flüssigkeit beschrieben, wobei das Dispergiersystem neben einem polymeren Emulgator, der bevorzugt ein amphiphiles Copolymer aus hydrophoben und hydrophilen Monomeren, wie beispielsweise aus langkettigen Alkyl(meth)acrylaten und basischen Alkylestern oder Alkylamiden der (Meth)acrylsäure sein kann, noch mindestens eine nichtionische Verbindung, ausgewählt aus C₆₋₁₂-Alkanolen, C₄-₁₂-Alkylenglykolmonoethern und deren C₁₋₄-Alkanoaten, C₆-₁₂-Polyalkylenglykolmonoethern und deren C₁₋₄-Alkanoaten und Benzylalkohol, enthält.

Nach diesem Stand der Technik sind Polymerisatsuspensionen, die in einer Ölphase ein suspendiertes wasserlösliches Polymerisat enthalten, erhältlich, die sich beim Eingeben in Wasser schnell umkehren und auflösen lassen. Sie haben eine genügende Kurzzeitstabilität (ca. 1 Monat). Ihre Langzeitstabilität, wie sie zum Lagern entsprechender technischer Produkte, z.B. von Flockungsmitteln in Kläranalgen, verfahrenstechnisch unumgänglich und ökonomisch notwendig ist, ist unzureichend und bedarf entsprechend deutlicher Verbesserung.

Insgesamt bietet der Stand der Technik keine Lösung für die Herstellung langzeitstabiler, schnell umkehrbarer Organosole mit einer organischen Phase, welche biologisch leicht abbaubar ist.

### Aufgabe und Lösung

Es war daher die Aufgabe der vorliegenden Erfindung, Suspensionen der genannten Art - Organosole - mit 10 - 100 Gew.-% biologisch gut abbaubarer Ölphase bereitzustellen, die bei Lagerung langzeitstabil sind und bei Einbringen in Wasser eine hohe Lösegeschwindigkeit zeigen. Insbesondere waren aromatenfreie bzw. aromatenarme stabile Organsole bereitzustellen.

Eine Lösung der gestellten Aufgabe wurde in Organosolen und dem Verfahren zu ihrer Herstellung gefunden, die bzw. bei deren Herstellung Polymeremulgatoren der im Stand der Technik genannten chemischen Art enthalten bzw. verwendet werden und deren Molekulargewichte in g/mol in bestimmten Bereichen liegen. Insbesondere wird eine hohe Absetzstabilität und damit verbesserten Lagerungsdauer bei gleichzeitig hoher Lösgeschwindigkeit des Organosols bei Einbringen in Wasser durch eine ganze Reihe von Zusätzen erreicht, wie durch einen weiteren, nicht polymeren, sondem niedermolekularen Emulgator, durch aliphatische monofunktionelle C₁₃-C₂₂ Alkohole sowie durch eine Verbindung mit 3 - 7 Kohlenstoffatomen und mindestens einer sekundären Alkoholgruppe.

Die Erfindung betrifft polymerhaltige Wasser-in-Öl-Emulsionen, enthaltend
A) eine kontinuierliche Ölphase,
B) eine feinteilige, in der Ölphase dispergierte Polymerisatphase, bestehend aus einer in Wasser gelösten oder mit Wasser gequollenen, wasserlöslichen hochmolekularen Verbindung,
C) in der Ölphase lösliche Wasser-in-Öl-Polymeremulgatoren bestehend aus Vinylpolymerisaten aus
   a) 10 bis 50 Gew.-% Monomeren mit einem basischen Stickstoffatom und
   b) 90 bis 50 Gew.-% Monomeren mit einer wenigstens 6 Kohlenstoffatome enthaltenden Alkyl-Seitenkette oder einem Gemisch solcher Monomeren mit einer geringeren Menge an anderen, nicht wasserlöslichen Vinylmonomeren,
   dadurch gekennzeichnet,
   1. daß der Polymeremulgator ein Molekulargewicht Mw im Bereich von 10 000 bis 100 000 g/mol mit entsprechenden reduzierten Viskositäten η_{sp/c} im Bereich von 8 bis 30 ml/g hat,
   2. daß die Ölphase aus 10 bis 100 Gew.-% aus biologisch gut abbaubaren Ölen auf Carbonsäureester-Basis besteht,
   3. daß die polymerhaltige Wasser-in-Öl-Emulsion neben dem Polymeremulgator noch niedermolekulare Emulgatoren mit HLB-Werten von 1 - 10 enthält,
   4. daß die Ölphase als stabilisierende Zusätze aliphatische monofunktionelle C₁₃-C₂₂-Alkohole enthält und
   5. daß die Wasserphase als weiteren stabilisierenden Zusatz 0,1 - 10 Gew.-% bezogen auf die polymerhaltige Wasser-in-Öl-Emulsion mindestens einer Verbindung mit 3 - 7 Kohlenstoffatomen und einer sekundären Alkoholgruppe enthält.

Die Polymeremulgatoren haben Molekulargewichte Mw im Bereich von 10 000 bis 100 000 g/mol, mit entsprechenden reduzierten Viskositäten η_{sp/c} im Bereich von 8 bis 30 ml/g.

Eine Kombination der erfindungsgemäßen Polymeremulgatoren mit niedermolekularen Emulgatoren, deren HLB-Werte von 1 bis 10, bevorzugt zwischen 6 und 9 liegen, wirkt sich als Emulgiermittel besonders günstig auf die Lagerstabilität von Organosolen, insbesondere von aromatenfreien bzw. aromatenarmen Organosolen aus.

Die aromatenarmen Öle besitzen Aromatengehalte under 0.1%.

Insbesondere lassen sich mit dieser erfindungsgemäßen Emulgatorkombination stabile und gut handhabbare organosole mit biologisch leicht abbaubaren und damit umweltfreundlichen Ölen auf Carbonsäureester-Basis, wie Naturölen, z.B. Rüböl, erfindungsgemäß und vorteilhaft so herstellen, daß nach der Polymerisation in Gegenwart der erfindungsgemäßen Emulgatorkombination, das hierbei verwendete Kohlenwasserstofföl mit einem Siedebereich von 65 bis 140 Grad C, wie z.B. Hexan oder Heptan, durch Zugabe von Ölen auf Carbonsäureester-Basis und Abdestillation des Kohlenwasserstoffs partiell oder ganz ersetzt wird.

### Vorteile der Erfindung

Die Bereitstellung von Organosolen, die gleichzeitig eine hohe Stabilität und eine hohe Lösungsgeschwindigkeit in Wasser bei ihrer Anwendung besitzen, war wie der aufgezeigte Stand der Technik ausweist, Gegenstand mehrerer Patenterteilungen. Während mit der Kombination wasserlösliche Säure und Gemische zweier Polymeremulgatoren, die sich im Gehalt an basischem Stickstoff unterscheiden (DE-C 32 10 752), eine hohe und technisch akzeptable Lösungsgeschwindigkeit der Suspension in Wasser erzielbar war, konnte bisher die Stabilität nur graduell verbessert werden.

Durch die vorliegende Erfindung ist es möglich, die Stabilität der Polymersuspensionen, die bisher nach etwa einem Monat sich entmischten und sich dabei in eine Ölschicht und ein Polymersediment auftrennten, um ein vielfaches zu erhöhen, wodurch transport- und lagerstabile Polymersuspensionen zugänglich sind. Die neuen Organosole waren nach 6 Monaten bisheriger Prüfzeit stabil.

Kombinationen der erfindungsgemäß zu verwendenden Polymeremulgatoren mit Molekulargewichten Mw im Bereich vom 10 000 bis 100 000 g/mol und insbesondere von 20 000 bis 100 000 g/mol mit bekannten niedermolekularen Emulgatoren mit HLB-Werten von 1 bis 10 wirken sich vorteilhaft auf die Stabilität von aromatenarmen oder aromatenfreien Organosolen aus, was im Hinblick auf die problematische Umweltverträglichkeit von Aromaten, durch deren Reduzierung oder gänzliche Eliminierung bedeutend ist. Damit können aromatenhaltige Öle, die im allgemeinen stabilere Emulsionen als aromatenarme bzw. aromatenfreie Öle ergeben, durch umweltfreundlichere Öle für die Herstellung stabiler Organosole substituiert werden.

Durch die weitere erfindungsgemäße Herstellung von Organosolen mit einer Ölphase auf Carbonsäureester-Basis mit dem Zwischenschritt der Polymerisation in einem apolaren Niedrigsieder, z.B. n-Heptan, werden folgende Nachteile, die sich bei direkter Polymerisation in den Carbonsäureester-Ölen ergeben, vermieden:
- zu hohe Viskosität der Polymer-Emulsion (> 4000 mPa s)
- Reproduktionsprobleme bezüglich der Produkviskosität
- schlechte Lagerstabilität.

So erhaltene Organosole lassen sich gut handhaben (Viskositäten ≤ 4000 mPa s) und sind durch den erfindungsgemäßen Einsatz eines im Molekulargewicht optimierten Polymeremulgators in Kombination mit einem niedermoleklaren Emulgator mindestens 3 Monate lagerstabil.

### Gewerbliche Verwertbarkeit

Die erfindungsgemäßen Suspensionen können wasserlösliche Polymerisate mit kationischem, anionischem, ampholytischem oder nichtionischem Charakter enthalten. Der Anteil der Ölphase kann z.B. 15 - 60 Gew.-% betragen und liegt vorzugsweise im Bereich von 25 - 50 Gew.-%. Die Polymerisatphase enthält nach der Herstellung soviel Wasser, wie zum Auflösen des wasserlöslichen Polymeren oder des zugrundeliegenden Monomerengemisches verwendet worden ist. Der Wassergehalt liegt häufig im Bereich von 10 - 50, vorzugsweise 15 - 30 % bezogen auf das Gewicht der Polymerisatphase. Durch azeotrope Entwässerung kann der Wasseranteil teilweise oder vollständig entfernt werden. Die Polymerisatphase bildet flüssige Tröpfchen oder gelartige oder feste Partikel mit einem Teilchendurchmesser von etwa 0,1 - 10 µm. Die Suspension ist je nach dem Anteil der Polymerisatphase dünnflüssig bis zähflüssig oder pastenförmig; die Viskosität liegt vorzugsweise im Bereich 600 - 2000 mPas. Das Molekulargewicht des wasserlöslichen Polymerisats kann Werte bis zu mehreren Millionen erreichen. Einprozentige wäßrige Lösungen der Polymerisate haben Viskositäten von z.B. 500 - 10 000 mPas.

Die neuen Polymerisatsuspensionen werden überwiegend zur Herstellung von verdünnten wäßrigen Lösungen des wasserlöslichen Polymerisats verwendet. Für derartige Lösungen mit Polymerisatgehalten im Bereich von etwa 0,01 - 60 Gew.-% gibt es eine Vielzahl von Verwendungsmöglichkeiten, beispielsweise als Verdickungsmittel, Flockungs- und Sedimentierhilfsmittel, Retentionsmittel bei der Papierherstellung, Färbereihilfsmittel, Haarfestiger usw.

### Ausführung der Erfindung

Die neuen Suspensionen können in der Weise hergestellt werden, daß man in der Ölphase, die mindestens das makromolekulare Emulgiermittel C) mit Molekulargewichten Mw von 10 000 bis 100 000 g/mol enthält, eine wäßrige Polymerisatlösung emulgiert. Bevorzugt wird jedoch in Gegenwart der erfindungsgemäßen Polymeremulgatoren C) in der Ölphase eine wäßrige Lösung der Bildungskomponenten des wasserlöslichen Polymerisats emulgiert und diese in der Suspension zu dem Polymerisat umgesetzt. Die zur Auflösung der Suspension in Wasser erforderliche Säure kann dem Lösungswasser zugesetzt werden, ist aber vorzugsweise in der Suspension selbst enthalten.

Der Wasseranteil, der mit der wäßrigen Lösung des Polymerisats oder seiner Bildungskomponenten in die Suspension gelangt, kann ganz oder teilweise entfernt werden. Dies kann auf zweckmäßige Weise dadurch geschehen, daß man die Ölphase wenigstens teilweise aus einer organischen Flüssigkeit herstellt, die mit Wasser ein Azeotrop bildet. Der Wasseranteil kann dann durch azeotrope Destillation aus der Suspension entfernt werden.

Die organische Flüssigkeit,
die zusammen mit dem makromolekularen Emulgiermittel die Ölphase der Suspension bildet, kann aus jeder organischen Flüssigkeit bestehen, die mit Wasser und mit der wäßrigen Polymerisatlösung bzw. mit der wäßrigen Lösung ihrer Bildungskomponenten nicht unbegrenzt mischbar ist. Sofern das wasserlösliche Polymerisat erst in der Suspension erzeugt wird, darf die organische Flüssigkeit nicht unterhalb der Polymerisationstemperatur sieden, bei dieser Temperatur mit der wäßrigen Phase nicht unbegrenzt mischbar sein und die Bildung des wasserlöslichen Polymerisats nicht behindern. Geeignet sind z.B. aliphatische Kohlenwasserstoffe, wie Hexan, Heptan, Benzin, Petroleum, Paraffinöl, Mineralöle; aromatische Kohlenwasserstoffe, wie Benzol, Toluol oder Xylol oder Chlorkohlenwasserstoffe sind geeignet, sollten jedoch wegen ihrer langsamen biologischen Abbaubarkeit keine, höchstens nur noch geringe, Verwendung finden. Gut geeignet sind die biologisch gut abbaubaren Carbonsäureester, insbesondere die diese enthaltenden natürlichen, pflanzlichen oder tierischen Öle, oder C₁₂-bis C₂₄-Fettsäure-C₁₋₄-alkylester und aliphatische Dicarbonsäureester. Die Ölphase besteht vorteilhaft aus 10 bis 100 Gew.-% aus biologisch gut abbaubaren Verbindungen, insbesondere Carbonsäureestern.

### Emulgiermittel

Die Wirksamkeit des makromolekularen Emulgiermittels und die Einwirkung der wasserlöslichen Säure auf die basischen Stickstoffatome ist in der DE-C 24 12 266 (Spalte 5, Zeilen 23 - 53) erläutert. Die dort gemachten Ausführungen gelten für das erfindungsgemäß verwendete Emulgiermittel mit Molekulargewichten von 10 000 bis 100 000, insbesondere von 20 000 bis 100 000 g/mol entsprechend. Zum Aufbau des Polymeremulgators sind als Vinylmonomere mit basischen Stickstoffatomen z.B. Vinylpyridin, Vinylimidazol und Dialkylaminoalkylester oder -amide der Acryl- oder Methacrylsäure, z.B. Dimethylaminoethylacrylat oder -methacrylat, Diethylaminopropylacrylamid oder - methacrylamid, zu nennen. Als hydrophobe Komponente der makromolekularen Emulgiermittel werden bevorzugt Ester der Acryl-, Methacryl-, Malein- oder Fumarsäure von 6 oder mehr C-Atomen enthaltenden Alkanolen wie Hexanol, Octanol, Octadecanol oder von technischen Alkoholgemischen, die z.B. unter der Bezeichnung Lorol®, oder Dobanol® im Handel sind, eingesetzt. Neben derartigen Estern können auch weniger hydrophobe, wasserunlösliche Comonomere in geringeren Mengen am Aufbau des Emulgiermittels beteiligt sein, wie z.B. Styrol und niedere Ester der Acryl- oder Methacrylsäure. Das Mengenverhältnis der Monomeren mit basischen Stickstoffatomen zu den Monomeren mit höheren Alkylresten wird jeweils so abgestimmt, daß der HLB-Wert im nicht neutralisierten Zustand unter 6, vorzugsweise unter 5 und nach Umsetzung der basischen Stickstoffatome mit der wasserlöslichen Säure über 8, insbesondere im Bereich von 10 - 15 liegt. Bei einem Anteil der Monomeren mit basischen Stickstoffatomen von 10 - 50 Gew.-%, insbesondere 20 - 40 Gew.-%, wird dieses Verhalten erreicht.

Der Polymeremulgator mit Molekulargewicht von 10 000 bis 100 000 g/mol kann, wie dies in der DE-C 32 10 752 beschrieben ist, auch ein Gemisch zweier emulgierender Polymerer sein, die sich in ihrem Gehalt an basischem Stickstoff um 0,1 bis 1,5 Gew.-% Punkte unterscheiden. Es ist zweckmäßig, aber nicht grundsätzlich erforderlich, daß die an dem gesamten Emulgiermittel beteiligten Mischpolymerisate aus den gleichen Monomerbausteinen aufgebaut sind.

Die Mischpolymerisate werden zweckmäßig durch radikalische Lösungspolymerisation in der organischen Flüssigkeit erzeugt, die die organische Phase der Suspension bildet.

Nach ihrem molekularen Aufbau bekannte, jedoch erfindungsgemäß zu verwendende und wirkende Polymeremulgatoren in Organosolen, liegen in dem gefundenen Molekulargewichtsbereich mit Mw-Werten von 10 000 bis 100 000 g/mol, gemessen mit der Gelpermeationschromatographie nach Eichung mit Polymethylmethacrylat (Hofmann, Krämer und Kuhn, Polymer-analytik, Bd. 1, 349 ff, Georg Thieme Verlag Stuttgart (1977)), und haben n_{spez/c}-Werte im Bereich von 8 bis 30 ml/g (gemessen in Chloroform bei 25 Grad C nach DIN 1628, Teil 1 und Teil 6; 1991, Entwurf).

Diese Polymeremulagoren lassen sich herstellen, in dem bei der Lösungspolymerisation Kettenregler, vor allem Verbindungen mit freien SH-Gruppen, hier insbesondere Alkylmercaptane wie z.B. Dodecylmercaptan, zugegen sind. Neben diesen Kettenreglern hat die Menge des zugesetzten Polymerisationsinitiators einen gewissen, wenn auch gegenüber den Mercaptan-Reglern deutlich verminderten Einfluß auf das Molekulargewicht des amphiphilen, als Emulgator wirkenden Mischpolymerisats.

Wie in den Beispielen gezeigt wird, sind Organosole, die mit Polymeremulgatoren mit Molekulargewichten um 10 000 g/mol hergestellt wurden nur über einige Tage stabil und trennen sich dann schnell auf. Mit Polymeremulgatoren vom Molekulargewicht über 100 000 g/mol hergestellte Organosole sind ebenfalls nicht langzeitstabil. Organosole, die Mineralöle, insbesondere solche, die aromatenhaltig sind, als Ölphasen haben, zeigen bessere Stabilitäten als solche Organosole, deren Ölphasen im wesentlichen keine Mineralöle, enthalten, sondern aus Ölen pflanzlichen- oder tierischen Ursprungs auf Esterbasis bestehen.

Die in Kombination mit den erfindungsgemäßen Polymeremulgatoren vorteilhaft mitzuverwendenden niedermolekularen Emulgatoren sind für Wasser-in-Öl-Emulsionen bekannt. Sie haben HLB-Werte im Bereich von 1 bis 10 und sind chemisch beispielsweise Fettsäureester von mehrwertigen Alkoholen, wie z.B. Sorbitanmonostearat und Sorbitanmonoolet, oder es können Polyglykolether sein, wie z.B. Polyethoxilat von Rizinusöl mit 15 Mol Ethylenoxid (EO), HLB-Wert: 8,5 oder Talgfettalkoholethoxilat mit 5 Mol Ethylenoxid.

Weitere bekannte Zusätze zum Dispergiersystem sind aus dem EP-B 0 126 528 bekannt, insbesondere sind es C₆₋₁₂-Akanole und deren (Poly)Alkylenglykolmonoethern und deren Alkanoate. Aber auch monofunktionelle, aliphatische Alkohole mit einer höheren C-Zahl als 12, z.B. insbesondere solche mit 13-22-Kohlenstoffatomen, können vorteilhaft der Ölphase in Mengen von 2 bis 50 Gew.-% zugesetzt werden. Sie leisten dabei einen Beitrag zur Erhöhung der Stabilität der Polymeremulsion.

Das wasserlösliche Polymerisat
kann bei der Herstellung der Suspension in einer Konzentration von etwa 10 - 90 Gew.-% bezogen auf das Gewicht der wäßrigen Polymerisatphase, vorliegen.Vorzugsweise liegt der Wassergehalt der Polymerisatphase zwischen 10 und 50 Gew.-%, was durch Einsatz entsprechend konzentrierter wäßriger Polymerisatlösungen oder entsprechend konzentrierter Lösungen ihrer Bildungskomponenten oder durch azeotrope Entwässerung einer ursprünglich mehr Wasser enthaltenden Suspension erreichbar ist. Auch die vollständige Entwässerung ist möglich.
Das wasserlösliche Polymerisat kann kationischen, anionischen, ampholytischen oder nichtionischen Charakter haben. Am Aufbau der ionischen Polymerisate können auch nichtionische Monomereinheiten - auch von Monomeren, die nicht wasserlöslich sind - beteiligt sein. Die wasserlöslichen Polymerisate können Naturstoffe sein, wie z.B. Alginate, Pektine oder Gelatine, oder es können Derivate von Naturstoffen sein, wie z.B. Carboxymethylcellulose. Vorzugsweise handelt es sich um wasserlösliche Vinylpolymerisate mit anionischem, kationischem, ampholytischem oder nichtionischem Charakter. Sie können nach einem beliebigen bekannten Polymerisationsverfahren hergestellt und in Form ihrer wäßrigen Lösung in der Ölphase emulgiert werden. Vorzugsweise wird jedoch eine wäßrige Lösung ihrer Bildungskomponenten emulgiert und in Form der Emulsion zu einem Polymerisat umgesetzt. In der Regel bestehen die Bildungskomponenten aus einem wasserlöslichen, radikalisch polymerisierbaren Vinylmonomeren oder Vinylmonomerengemisch und einem geeigneten Polymerisationsinitiator, die in emulgierter Form polymerisationsauslösenden Bedingungen unterworfen werden.

Monomere zur Herstellung solcher Poylmerisate sind Verbindungen, die vor allem in Wasser bzw. in der wäßrigen Monomerphase löslich sind und eine ethylenisch ungesättigte, polymerisationsfähige Doppelbindung haben. Beispiele von solchen Monomeren sind Acrylsäure, Methacrylsäure, Alkalisalze von Acrylsäure und Methacrylsäure, die Ammoniumsalze der beiden genannten Säuren, Acrylamid, Methacrylamid, N-substituierte Amide wie Methylmethacrylamid, Acrylamido- und Methacrylamidoalkylsulfonsäuren und ihre Salze, wie 2-Acrylamido-2-methylpropansulfonsäure, unter ihrem Handelsnamen "AMPS" (Lubrizol Corporation) bekannt, oder deren Natrium- bzw. Ammoniumsalz. Weitere wasserlösliche Monomere für die erfindungsgemäße Herstellung von polymerhaltigen Wasser-in-Öl-Emulsionen sind Acryl- und Methacrylester von Aminoalkoholen, wie z.B. Dimethylaminoethylmethacrylat, die auch in neutralisierter oder quaternierter Form zur Polymerisation eingesetzt werden. Weitere brauchbare wasserlösliche Monomere sind Hydroxyalkylacrylate und -methacrylate wie z.B. Ethylenglykolmonoacrylat und 2-Hydroxypropylmethacrylat. Auch α,β-ungesättigte Monomere, die nicht der Acryl- bzw. Methacrylreihe angehören und in der Wasserphase löslich sind, wie Maleinsäure oder Vinylsulfonsäure oder Vinylbenzolsulfonsäure oder deren Alkali- und Ammoniumsalze oder N-Vinylpyrrolidon sind in dem erfindungsgemäßen Verfahren als polymerisierbare Verbindungen einsetzbar.

Bevorzugte Monomere sind Acrylamid, Methacrylamid, "AMPS", Natriumacrylat, Natriummethacrylat, Ammoniumacrylat, 2-Dimethylaminoethylmethacrylat-hydrochlorid, 2-Trimethylammoniumethylmethacrylat-chlorid, 2-Trimethylammoniumethylacrylat-chlorid, N-Trimethylammoniumpropylmethacrylamid-chlorid, Trimethylammoniumpropylacrylamid-chlorid und die entsprechenden Trimethylammoniummethosulfate. Vorwiegend als Flockungsmittel eingesetzte Acrylamidcopolymerisate können eines oder mehrere Comonomere in Mengen von 2 bis 80 Gew.-% des Gesamtpolymeren enthalten.

Zur Überführung der erwähnten Bildungskomponenten in das wasserlösliche Polymerisat kann ein Initiator oder Initiatorsystem verwendet werden, das ganz oder teilweise in der organischen Phase gelöst ist. Vorzugsweise ist jeoch der Polymerisationsinitiator zusammen mit den anderen Bildungskomponenten in der wäßrigen Phase gelöst.

Wenn die Überführung der Bildungskomponenten in das Polymerisat mittels energiereicher Strahlung, insbesondere UV-Licht, durchgeführt wird, ist es zweckmäßig, einen Photoinitiator zu verwenden, wie z.B. Benzoin, Benzoin-Ether, Acyloine und deren Ether, Benzophenone, Anthrachinone, Anthrachinoncarbonsäuren usw. Zur Durchführung der Polymerisation durch Erwärmen, beispielswiese auf Temperaturen zwischen 50 und 100 Grad C, können thermisch zerfallende Initiatoren verwendet werden, wie Alkali- oder Ammoniumpersulfat, Azoverbindungen, wie Azo-bis-valeriansäure oder Azo-bis-isobutyronitril. Für niedrigere Polymerisationstemperaturen eignen sich Redox-Initiatorsysteme, beispielsweise tert.-Butylhydroperoxid in Kombination mit einer reduzierenden Komponente, wie Na-Pyrosulfit. In diesem Fall kann eine Komponente des Initiatorsystems, insbesondere die peroxidische Komponente, in der Ölphase gelöst sein.

Die Initiatoren werden in den gebräuchlichen Mengen von z.B. 0,01 bis 1 Gew.-% bezogen auf das Monomerengewicht, eingesetzt. Die Photopolymerisation kann mit UV-Licht bei Raumtemperatur oder auch darunter ausgelöst werden. Man benötigt eine Strahlung im Wellenlängenbereich von 150 bis 500, insbesondere 200 bis 400 nm, die mit einer Quecksilberdampf-, Xenon- oder Wolfram-Lampe, Kohlebogen-Lampe oder bevorzugt mit Leuchtstoffröhren erzeugt wird. Zur thermischen Polymerisationsauslösung wird die Emulsion in der Polymerisationszone auf die Zerfallstemperatur des Initiators, die meist im Bereich von 40 bis 80 Grad C liegt, erwärmt. Nach dem Anspringen der Polymerisation kann die Polymerisationswärme z.B. durch äußere Kühlung abgeführt werden.

Die Säure,
die zur Überführung der Suspension in eine wäßrige Lösung benötigt wird, kann zwar in dem Lösungswasser verteilt werden, wird jedoch vorzugsweise in die Suspension selbst eingearbeitet. Sie kann z.B. nach der Herstellung der Suspension bzw. nach der Überführung der Bildungskomponenten in das wasserlösliche Polymerisat eingerührt werden. Es hat sich als nicht wesentlich erwiesen, ob sich die Säure in der organischen oder in der wäßrigen Phase befindet. Sie wird jedenfalls erst bei der Auflösung der Suspension in Wasser wirksam. Vorzugsweise wird die Säure schon zusammen mit dem wasserlöslichen Polymerisat oder seinen Bildungskomponenten in der wäßrigen Phase vor deren Emulgierung in der Ölphase gelöst. Wasserlösliche Säuren sind bevorzugt.
Art und Menge der für die Umkehrung erforderlichen Säure sind in der DE-C 32 10 752 näher beschrieben.

### Beispiele

### Beispiel 1

In die kontinuierliche Phase, bestehend aus einem C₁₃-C₁₅-Alkoholgemisch, einem ethoxilierten Ricinusöl, einem Polymeremulgator und n-Heptan wird die wäßrige Monomerlösung eingerührt.
Diese besteht aus den Monomeren Acrylamid, Methacrylamid, Trimethylammoniumethylmethacrylat-chlorid, einer Alkandicarbonsäure, Komplexbildner, einem sek. Alkohol wie 1,2-Propandiol und Wasser. Der pH-Wert der wäßrigen Monomerlösung liegt zwischen 3,5 und 4,5. Die sich beim Einrühren bildende Voremulsion wird mit einem Emulgiergerät unter Einwirkung hoher Scherkräfte (z.B. Dispaxreaktor, Ultraturrax) emulgiert, bis eine stabile W/O-Emulsion erhalten wird. Nach Begasung der Emulsion mit N₂ wird bei homogener Durchmischung isotherm bei 45 Grad C mit Ammoniumperoxodisulfat initiiert.
Nach Abklingen der Hauptreaktion wird 2,2'-Azobis-(2,4-dimethylvaleronitril) zugegeben, anschließend wird auf 50 Grad C erwärmt und eine Nachreaktion mit tert.- Butylhydroperoxid, Natriumhydroxymethylsulfinat und Eisen-II-sulfat durchgeführt.
Nach Reaktionsende erfolgt die Zugabe eines
Fettsäuremethylesters und das Abdestillieren des n-Heptans unter Vakuum bei 60 Grad C.
Zur verbesserten Invertierung wird nach der Polymerisation ein Emulgator mit einem HLB-Wert von < 10 zugesetzt.

| **kontin. Phase:** | |
|---|---|
| 267,0 g | n-Heptan |
| 27,0 g | Mineralöl mit < 0,1 Gew.-% an Aromaten |
| 120,0 g | 70 %iger Polymeremulgator aus 70 Gew.-% eines C₁₂-C₁₈-Alkylmethacrylats und 30 Gew.-% N,N-Dimethylaminoethylmethacrylat; |
| | η_{sp/c} = 12,0 ml/g; |
| | MW = 22 000 |
| 10,0 g | ethoxiliertes Ricinusöl mit 15 Mol EO |

| **wäßrige Phase:** | |
|---|---|
| 128,4 g | Acrylamid |
| 9,2 g | Methacrylamid |
| 427,5 g | Trimethylammoniumethylmethacrylat-chlorid als 75 %ige Lösung |
| 10,0 g | 1,2-Propandiol |
| 24,3 g | Adipinsäure |
| 0,06 g | Komplexbildner EDTA in 0,6 g Wasser |

| **Initiatoren:** | |
|---|---|
| 0,4 g | Ammoniumperoxodisulfat |
| 0,024 g | 2,2'-Azobis-(2,4-dimethylvaleronitril) |

| **Fettsäureester:** | |
|---|---|
| 243,0 g | Laurinsäuremethylester |

| **Invertierung:** | |
|---|---|
| 0,5 g | C₁₃-Oxoalkoholpolyglycolether mit 10 Mol EO |

### Kenndaten:

Wirkstoffgehalt: 47,3 %
Restwassergehalt: 7,9 %
Viskosität der W/O-Emulsion: 2 000 mPas
1 %ige Lösungsviskosität in Leitungswasser: 6 000 mPas
Umkehrzeit: < 10 sec.
Remogehalt an Acrylamid: < 1 000 ppm
Lagerstabilität: mindestens 3 Monate stabil

### Beispiel 2

In die kontinuierliche Phase, bestehend aus einem C₁₃-C₁₅-Alkoholgemisch, einem ethoxilierten Ricinusöl, einem Polymeremulgator und n-Heptan wird die wäßrige Monomerlösung eingerührt.
Diese besteht aus den Monomeren Acrylamid, Methacrylamid, Trimethylammoniumethylmethacrylat-chlorid, einer Alkandicarbonsäure, Komplexbildner, einem sek. Alkohol wie 1,2-Propandiol und Wasser. Der pH-Wert der wäßrigen Monomerlösung liegt zwischen 3,5 und 4,5. Die sich beim Einrühren bildende Voremulsion wird mit einem Emulgiergerät unter Einwirkung hoher Scherkräfte (z.B. Dispaxreaktor, Ultraturrax) emulgiert, bis eine stabile W/O-Emulsion erhalten wird. Nach Begasung der Emulsion mit N₂ wird bei homogener Durchmischung isotherm bei 45 Grad C mit Ammoniumperoxodisulfat initiiert.
Nach Abklingen der Hauptreaktion wird 2,2'-Azobis-(2,4-dimethylvaleronitril) zugegeben, anschließend wird auf 50 Grad C erwärmt und eine Nachreaktion mit tert.-Butylhydroperoxid, Natriumhydroxymethyl-sulfinat und Eisen-II-sulfat durchgeführt.
Nach Reaktionsende erfolgt die Zugabe eines Fettsäuremethylesters und das Abdestillieren des n-Heptans unter Vakuum bei 60 Grad C.
Zur verbesserten Invertierung wird nach der Polymerisation ein Emulgator mit einem HLB-Wert von < 10 zugesetzt.

| **kontin. Phase:** | |
|---|---|
| 267,0 g | n-Heptan |
| 27,0 g | C₁₃-C₁₅-Alkoholgemisch |
| 120,0 g | 70 %iger Polymeremulgator aus 70 Gew.-% eines C₁₂-C₁₈-Alkylmethacrylats und 30 Gew.-% N,N-Dimethylaminoethylmethacrylat; |
| | η_{sp/c} = 12,0 ml/g; |
| | Mw = 22 000 |
| 10,0 g | ethoxiliertes Ricinusöl mit 15 Mol EO |

| **wäßrige Phase:** | |
|---|---|
| 128,4 g | Acrylamid |
| 9,2 g | Methacrylamid |
| 427,5 g | Trimethylammoniumethylmethacrylat-chlorid als 75 %iger Lösung |
| 10,0 g | 1,2-Propandiol |
| 24,3 g | Adipinsäure |
| 0,06 g | Komplexbildner EDTA in 0,6 g Wasser |

| **Initatoren:** | |
|---|---|
| 0,4 g | Ammoniumperoxodisulfat |
| 0,024 g | 2,2'-Azobis-(2,4-dimethylvaleronitril) |

| **Fettsäureester:** | |
|---|---|
| 243,0 g | Mischung aus Öl- und Linolsäuremethylester |

| **Invertierung:** | |
|---|---|
| 0,5 g | C₁₃-Oxoalkoholpolyglycolether mit 10 Mol EO |

### Kenndaten:

Wirkstoffgehalt: 47,0 %
Restwassergehalt: 7,5 %
Viskosität der W/O-Emulsion: 2 000 mPas
1 %ige Lösungsviskosität in Leitungswasser: 6 000 mPas
Umkehrzeit: < 10 sec.
Remogehalt an Acrylamid: < 1 000 ppm
Lagerstabilität: mindestens 3 Monate stabil

### Beispiel 3

In die kontinuierliche Phase, bestehend aus einem C₁₂-C₁₅-Alkoholgemisch, einem ethoxilierten Ricinusöl, einem Polymeremulgator und n-Heptan wird die wäßrige Monomerlösung eingerührt.
Diese besteht aus den Monomeren Acrylamid, Methacrylamid, Trimethylammoniumethylmethacrylat-chlorid, einer Alkandicarbonsäure, Komplexbildner, einem sek. Alkohol wie 1,2-Propandiol und wasser. Der pH-Wert der wäßrigen Monomerlösung liegt zwischen 3,5 und 4,5. Die sich beim Einrühren bildende Voremulsion wird mit einem Emulgiergerät unter Einwirkung hoher Scherkräfte (z.B. Dispaxreaktor, Ultraturrax) emulgiert, bis eine stabile W/O-Emulsion erhalten wird. Nach Begasung der Emulsion mit N₂ wird bei homogener Durchmischung isotherm bei 45 Grad C mit Ammoniumperoxodisulfat initiiert.
Nach Abklingen der Hauptreaktion wird 2,2'-Azobis-(2,4-dimethylvaleronitril) zugegeben, anschließend wird auf 50 Grad C erwärmt und eine Nachreaktion mit tert.-Butylhydroperoxid, Natriumhydroxymethylsulfinat und Eisen-II-sulfat durchgeführt. Nach Reaktionsende erfolgt die Zugabe von
Ölsäuremethylester und das Abdestillieren des n-Heptans unter Vakuum bei 60 Grad C. Zur verbesserten Invertierung wird nach der Polymerisation ein Emulgator mit einem HLB-Wert von < 10 zugesetzt.

| **kontin. Phase:** | |
|---|---|
| 267,0 g | n-Heptan |
| 27,0 g | C₁₃-C₁₅-Alkoholgemisch |
| 120,0 g | 70 %iger Polymeremulgator aus 70 Gew.-% eines C₁₂-C₁₈-Alkylmethacrylats und 30 Gew.-% N,N-Dimethylaminoethylmethacrylat; |
| | n_{sp/c} = 12,0 ml/g; |
| | Mw = 22 000 |
| 10,0 g | ethoxiliertes Ricinusöl mit 15 Mol EO |

| **wäßrige Phase:** | |
|---|---|
| 128,4 g | Acrylamid |
| 9,2 g | Methacrylamid |
| 427,5 g | Trimethylammoniumethylmethacrylat-chlorid als 75 %ige Lösung |
| 10,0 g | 1,2-Propandiol |
| 24,3 g | Adipinsäure |
| 0,06 g | Komplexbildner EDTA in 0,6 g Wasser |

| **Initiatoren:** | |
|---|---|
| 0,4 g | Ammoniumperoxodisulfat |
| 0,024 g | 2,2'-Azobis-(2,4-dimethylvaleronitril) |

| **Fettsäureester:** | |
|---|---|
| 243,0 g | Ölsäuremethylester |

| **Invertierung:** | |
|---|---|
| 0,5 g | C₁₃-Oxoalkoholpolyglycolether mit 10 Mol EO |

### Kenndaten:

Wirkstoffgehalt: 47,5 %
Restwassergehalt: 7,7 %
Viskosität der W/O-Emulsion: 1 800 mPas
1 %ige Lösungsviskosität in Leitungswasser: 5 800 mPas
Umkehrzeit: < 10 sec.
Remogehalt an Acrylamid: < 1 000 ppm
Lagerstabilität: mindestens 3 Monate stabil

### Beispiel 4

In die kontinuierliche Phase, bestehend aus einem C₁₃-C₁₅-Alkoholgemisch, einem ethoxilierten Ricinusöl, einem Polymeremulgatur und n-Heptan wird die wäßrige Monomerlösung eingerührt.
Diese besteht aus den Monomeren Acrylamid, Methacrylamid, Trimethylammoniumethylmethacrylat-chlorid, einer Alkandicarbonsäure, Komplexbildner, einem sek. Alkohol wie 1,2-Propandiol und Wasser. Der pH-Wert der wäßrigen Monomerlösung liegt zwischen 3,5 und 4,5. Die sich bei Einrühren bildende Voremulsion wird mit einem Emulgiergerät unter Einwirkung hoher Scherkräfte (z.B. Dispaxreaktor, Ultraturrax) emulgiert, bis eine stabile W/O Emulsion erhalten wird. Nach Begasung der Emulsion mit N₂ wird bei homogener Durchmischung isotherm bei 45 Grad C mit Ammoniumperoxodisulfat initiiert. Nach Abklingen der Hauptreaktion wird 2,2'-Azobis-(2,4-dimethylvaleronitril) zugegeben, anschließend wird auf 50 Grad C erwärmt und eine Nachreaktion mit tert.-Butylhydroperoxid, Natriumhydroxymethylsulfinat und Eisen-II-sulfat durchgeführt.
Nach Reaktionsende erfolgt die Zugabe eines Fettsäuremethylesters und das Abdestillieren des n-Heptans unter Vakuum bei 60 Grad C.
Zur verbessertin Invertierung wird nach der Polymerisation ein Emulgator mit einem HLB-Wert von < 10 zugesetzt.

| **kontin. Phase:** | |
|---|---|
| 267,0 g | n-Heptan |
| 27,0 g | C₁₃-C₁₅-Alkoholgemisch |
| 120,0 g | 70 %iger Polymeremulgator aus 70 Gew.-% eines C₁₂-C₁₈-Alkylmethacrylats und 30 Gew.-% N,N-Dimethylaminoethylmethacrylat; |
| | η_{sp/c} = 17,5 ml/g; |
| | Mw = 45 700 |
| 10,0 g | ethoxiliertes Ricinusöl mit 15 Mol EO |

| **wäßrige Phase:** | |
|---|---|
| 128,4 g | Acrylamid |
| 9,2 g | Methacrylamid |
| 427,5 g | Trimethylammoniumethylmethacrylat-chlorid als 75 %ige Lösung |
| 10,0 g | 1,2-Propandiol |
| 24,3 g | Adipinsäure |
| 0,06 g | Komplexbildner EDTA in 0,6 g Wasser |

| **Initiatoren:** | |
|---|---|
| 0,4 g | Ammoniumperoxodisulfat |
| 0,024 g | 2,2'-Azobis-(2,4-dimethylvaleronitril) |

| **Fettsäureester:** | |
|---|---|
| 243,0 g | Laurinsäuremethylester |

| **Invertierung:** | |
|---|---|
| 0,5 g | C₁₃-Oxoalkoholpolyglycolether mit 10 Mol EO |

### Kenndaten:

Wirkstoffgehalt: 47,0 %
Restwassergehalt: 8,5 %
Viskosität der W/O-Emulsion: 9 000 mPas
1 %ige Lösungsviskosität in Leitungswasser: 6 700 mPas
Umkehrzeit: < 10 sec.
Remogehalt an Acrylamid: < 1 000 ppm
Lagerstabilität: mindestens 3 Monate stabil

## Patentansprüche

1. Polymerhaltige Wasser-in-Öl-Emulsionen, enthaltend
A) eine kontinuierliche Ölphase,
B) eine feinteilige, in der Ölphase dispergierte Polymerisatphase bestehend aus einer in Wasser gelösten oder mit Wasser gequollenen, wasserlöslichen hochmolekularen Verbindung,
C) in der Ölphase lösliche Wasser-in-Öl-Polymeremulgatoren bestehend aus Vinylpolymerisaten aus
a) 10 bis 50 Gew.-% Monomeren mit einem basischen Stickstoffatom und
b) 90 bis 50 Gew.-% Monomeren mit einer wenigstens 6 Kohlenstoffatome enthaltenden Alkyl-Seitenkette oder einem Gemisch solcher Monomeren mit einer geringeren Menge an anderen, nicht wasserlöslichen Vinylmonomeren,
dadurch gekennzeichnet,
1. daß der Polymeremulgator ein Molekulargewicht Mw im Bereich von 10 000 bis 100 000 g/mol mit entsprechenden reduzierten Viskositäten η_{sp/c} im Bereich von 8 bis 30 ml/g hat,
2. daß die Ölphase aus 10 bis 100 Gew.-% aus biologisch gut abbaubaren Ölen auf Carbonsäureester-Basis besteht,
3. daß die polymerhaltige Wasser-in-Öl-Emulsion neben dem Polymeremulgator noch niedermolekulare Emulgatoren mit HLB-Werten von 1 - 10 enthält,
4. daß die Ölphase als stabilisierende Zusätze aliphatische monofunktionelle C₁₃ - C₂₂-Alkohole enthält und
5. daß die Wasserphase als weiteren stabilisierenden Zusatz 0,1 - 10 Gew.-% bezogen auf die polymerhaltige Wasser-in-Öl-Emulsion mindestens einerVerbindung mit 3 - 7 Kohlenstoffatomen und einer sekundären Alkoholgruppe enthält.

2. Polymerhaltige Wasser-in-Öl-Emulsion nach Anspruch 1, dadurch gekennzeichnet, daß die wäßrige Polymerphase 1,2 Propandiol oder dessen C₁ bis C₁₁ Monoalkylether enthält.

3. Polymerhaltige Wasser-in-Öl-Emulsion nach den Ansprüchen 1 und 2, dadurch gekennzeichnet, daß die Ölphase aromatenarm bzw. aromatenfrei ist.

4. Polymerhaltige Wasser-in-Öl-Emulsion nach den Ansprüchen 1 bis 3, dadurch gekennzeichnet, daß sie eine, für die Umkehrung der Wasser-in-Öl-Emulsion erforderliche Säure enthält.

5. Polymerhaltige Wasser-in-Öl-Emulsion nach den Ansprüchen 1 bis 4, dadurch gekennzeichnet, daß die Emulsion entwässert vorliegt.

6. Verfahren zur Herstellung polymerhaltiger Wasser-in-Öl-Emulsion entsprechend Anspruch 1, durch Verteilen der wäßrigen Phase, die die zu dem Polymeren umsetzbaren Monomeren und mindestens eine Verbindung mit 3 - 7 Kohlenstoffatomen und einer sekundären Alkoholgruppe enthält, in der mit Wasser nicht unbegrenzt mischbaren Ölphase, die den Polymeremulgator und die aliphatischen monofunktionellen C₁₃ - C₂₂-Alkohole enthält, und anschließender Polymerisation der Monomeren, wobei nach Polymerisationsende die niedermolekularen Emulgatoren mit HLB-Werten von 1 - 10 zugesetzt werden, dadurch gekennzeichnet, daß nach der Polymerisation die Ölphase durch Zugabe von Ölen auf Carbonsäureester-Basis und anschließende Abdestillation der ursprünglichen Ölphase, diese ganz oder teilweise ersetzt wird.

7. Verfahren nach Anspruch 6, dadurch gekennzeichnet, daß der Ölphase vor der Polymerisation ein Schleppmittel zugesetzt wird, das ein Azeotrop mit Wasser bildet, und daß das erzeugte Polymerisatorganosol ganz oder teilweise azeotrop entwässert wird.

8. Verfahren nach Anspruch 6 und 7, dadurch gekennzeichnet, daß die Öle auf Carbonsäureester-Basis Fettsäuremonoester, insbesondere C_{1 - 4}-Alkylester von C₁₂₋₂₄-Fettsäuren und/oder pflanzliche oder tierische Naturöle, d.h. Fettsäuretriglyceride, und/oder Dicarbonsäuredialkylester sind.

9. Verfahren nach den Ansprüchen 6 bis 8, dadurch gekennzeichnet, daß während oder nach der Herstellung des Polymerisatorganosols eine Säure zugesetzt wird.

10. Verwendung der polymerhaltigen Wasser-in-Öl-Emulsion nach den Ansprüchen 1 bis 5, zur Herstellung einer verdünnten wäßrigen Lösung des wasserlöslichen Polymerisats in Anwesenheit einer wasserlöslichen Säure.

## Claims

1. Polymer-containing water-in-oil emulsions including
A) a continuous oil phase;
B) dispersed in said oil phase, a finely particulate polymerizate phase consisting of a water-soluble, high molecular weight compound dissolved in water or swelled with water;
C) water-in-oil polymer emulsifiers soluble in said oil phase and consisting of vinyl polymerizates of
a) from 10 to 50 wt.-% of monomers having a basic nitrogen atom, and
b) from 90 to 50 wt.-% of monomers having an alkyl side-chain containing at least 6 carbon atoms, or a mixture of such monomers with a minor amount of other, water-insoluble vinyl monomers,
characterized in that
i) the polymer emulsifier has a molecular weight Mw ranging from 10,000 to 100,000 g/mole, with correspondingly reduced viscosities η_{sp/c} ranging from 8 to 30 ml/g,
ii) the oil phase consists of from 10 to 100 wt.-% of readily biodegradable oils based on carboxylic esters,
iii) in addition to the polymer emulsifier, the polymer-containing water-in-oil emulsion further includes low molecular weight emulsifiers having HLB values of 1-10,
iv) the oil phase contains aliphatic monofunctional C₁₃-C₂₂ alcohols as stabilizing additives, and
v) the aqueous phase contains as further stabilizing additive from 0.1 to 10 wt.-%, relative to the polymer-containing water-in-oil emulsion, of at least one compound having 3-7 carbon atoms and a secondary alcohol group.

2. The polymer-containing water-in-oil emulsion of claim 1, characterized in that the aqueous polymer phase contains 1,2-propanediol or a C₁-C₁₁ monoalkyl ether thereof.

3. The polymer-containing water-in-oil emulsion according to claims 1 and 2, characterized in that the oil phase is low in aromatic compounds or free of aromatic compounds.

4. The polymer-containing water-in-oil emulsion according to claims 1 to 3, characterized in that it includes an acid required for the reversal of the water-in-oil emulsion.

5. The polymer-containing water-in-oil emulsion according to claims 1 to 4, characterized in that the emulsion is in a dehydrated state.

6. A process for producing the polymer-containing water-in-oil emulsions according to claim 1 by dispersing the aqueous phase including the monomers which may be converted to the polymer, and at least one compound having 3-7 carbon atoms and a secondary alcohol group, in said oil phase which is not completely miscible with water and contains the polymer emulsifier and the aliphatic monofunctional C₁₃-C₂₂ alcohols, and subsequently polymerizing the monomers, the low molecular weight emulsifiers having HLB values of 1-10 being added after the polymerization is completed, characterized in that the oil phase after polymerization is replaced completely or partially by adding oils based on carboxylic esters and subsequently distilling off the original oil phase.

7. The process according to claim 6, characterized in that an entrainer forming an azeotrope with water is added to the oil phase prior to polymerization, and the polymerizate organosol produced is subjected to complete or partial azeotropic dehydration.

8. The process according to claims 6 and 7, characterized in that the oils based on carboxylic esters are fatty acid monoesters, particularly C₁₋₄ alkyl esters of C₁₂₋₂₄ fatty acids, and/or vegetable or animal natural oils, i.e., fatty acid triglycerides, and/or dialkyl dicarboxylates.

9. The process according to claims 6 to 8, characterized in that an acid is added during or after the production of the polymerizate organosol.

10. Use of the polymer-containing water-in-oil emulsion according to claims 1 to 5 in the production of a dilute aqueous solution of the water-soluble polymerizate in the presence of a water-soluble acid.

## Revendications

1. Émulsions eau dans huile contenant un polymère, comportant:
A) une phase huileuse continue
B) une phase polymère finement divisée, dispersée dans la phase huileuse, constituée d'un composé de poids moléculaire élevé, soluble dans l'eau, dissous dans l'eau ou gonflé d'eau,
C) des émulsifiants polymères eau dans huile, solubles dans la phase huileuse, constitués de polymérisats vinyliques contenant
a) 10 à 50% en poids de monomères présentant un atome d'azote basique et
b) 90 à 50% en poids de monomères présentant une chaîne latérale alkyle contenant au moins 6 atomes de carbone ou un mélange de ces monomères avec une quantité plus faible d'autres monomères vinyliques non solubles dans l'eau,
caractérisées par le fait,
1. que l'émulsifiant polymère a un poids moléculaire Mw compris entre 10 000 à 100 000 g/mol avec des viscosités réduites correspondantes η_{sp/c} comprises entre 8 et 30 ml/g,
2. que la phase huileuse est constituée de 10 à 100% en poids d'huiles facilement dégradables biologiquement à base d'ester d'acide carboxylique.
3. que l'émulsion eau dans huile contenant un polymère contient encore, à côté de l'émulsifiant polymère, des émulsifiants de faible poids moléculaire ayant une valeur de HLB de 1-10,
4. que la phase huileuse contient comme additifs de stabilisation des monoalcools en C₁₃-C₂₂ aliphatiques et
5. que la phase aqueuse contient comme autre additif de stabilisation 0,1-10% en poids, par rapport à l'émulsion eau dans huile contenant un polymère, d'au moins un composé contenant 3-7 atomes de carbone et un radical alcool secondaire.

2. Émulsion eau dans huile contenant un polymère selon la revendication 1, caractérisée par le fait que la phase aqueuse de polymère contient du 1,2 propanediol ou son monoalkyléther en C₁ à C₁₁.

3. Émulsion eau dans huile contenant un polymère selon l'une des revendications 1 et 2, caractérisée par le fait que la phase huileuse est pauvre en composés aromatiques ou exempte de composés aromatiques.

4. Émulsion eau dans huile contenant un polymère selon l'une des revendications 1 à 3, caractérisée par le fait qu'elle contient un acide nécessaire pour l'inversion de l'émulsion eau dans huile.

5. Émulsion eau dans huile contenant un polymère selon l'une des revendications 1 à 4, caractérisée par le fait que l'émulsion se présente déshydratée.

6. Procédé de fabrication d'une émulsion eau dans huile contenant un polymère selon la revendication 1, par répartition de la phase aqueuse, qui contient les monomères polymérisables en polymères et au moins un composé contenant 3-7 atomes de carbone et un radical alcool secondaire, dans la phase huileuse qui n'est pas miscible sans limite à l'eau et qui contient l'émulsifiant polymère et les monoalcools en C₁₃-C₂₂ aliphatiques, puis ensuite polymérisation des monomères, procédé dans lequel à la fin de la polymérisation, on ajoute les émulsifiants de faible poids moléculaire et ayant une valeur de HLB de 1-10, caractérisé par le fait qu'après la polymérisation la phase huileuse est complètement ou partiellement décomposée par addition d'huiles à base d'ester d'acide carboxylique puis distillation de la phase huileuse d'origine.

7. Procédé selon la revendication 6, caractérisé par le fait qu'à la phase huileuse on ajoute, avant la polymérisation, un agent d'entraînement qui forme un azéotrope avec l'eau et que l'on déshydrate complètement ou partiellement, par voie azéotropique, l'organosol polymérisé produit.

8. Procédé selon l'une des revendications 6 et 7, caractérisé par le fait que les huiles à base d'ester d'acide carboxylique sont des monoesters d'acides gras, en particulier des alkylesthers en C₁₋₄ d'acides gras en C₁₂₋₂₄ et/ou des huiles naturelles, végétales ou animales, c'est-à-dire des triglycérides d'acides gras et/ou des dialkylesters d'acides dicarboxyliques.

9. Procédé selon l'une des revendications 6 à 8, caractérisé par le fait que pendant ou après la fabrication de l'organosol polymérisé on ajoute un acide.

10. Emploi de l'émulsion eau dans huile contenant un polymère selon l'une des revendications 1 à 5 pour fabriquer une solution aqueuse diluée du polymère soluble dans l'eau en présence d'un acide soluble dans l'eau.
